# EUROPÄISCHE PATENTSCHRIFT

(11) **EP 2 788 099 B1**
(45) Veröffentlichungstag und Bekanntmachung des Hinweises auf die Patenterteilung: **19.06.2019**
(21) Anmeldenummer: 12788490.6
(22) Anmeldetag: 13.11.2012
(51) Int. Cl.: B01D 35/00, B01D 36/00, B01D 29/58, F02M 37/22, B01D 17/04

(54) **KRAFTSTOFFFILTER EINER BRENNKRAFTMASCHINE UND FILTERELEMENT EINES KRAFTSTOFFFILTERS**
FUEL FILTER OF AN INTERNAL COMBUSTION ENGINE, AND FILTER ELEMENT OF A FUEL FILTER
FILTRE À CARBURANT D'UN MOTEUR À COMBUSTION INTERNE ET ÉLÉMENT FILTRANT D'UN FILTRE À CARBURANT

(30) Priorität: 09.12.2011 DE 102011120647
(43) Veröffentlichungstag der Anmeldung: 15.10.2014
(73) Patentinhaber: MANN+HUMMEL GmbH, 71636 Ludwigsburg (DE)
(72) Erfinder: KLEIN, Martin, 95447 Bayreuth (DE); VEIT, Martin, 71116 Gärtringen (DE)
(86) Internationale Anmeldenummer: PCT/EP2012/072453
(87) Internationale Veröffentlichungsnummer: WO 2013/083365

(56) Entgegenhaltungen:
- EP-A2- 0 207 797
- US-A- 5 439 588
- US-A1- 2009 178 970
- US-A1- 2011 084 028

## Beschreibung

### Technisches Gebiet

Die Erfindung betrifft einen Kraftstofffilter für Kraftstoff, insbesondere Dieselkraftstoff, einer Brennkraftmaschine insbesondere eines Kraftfahrzeugs, mit einem Gehäuse, welches wenigstens einen Kraftstoffeinlass für zu reinigenden Kraftstoff, wenigstens einen Kraftstoffauslass für gereinigten Kraftstoff und wenigstens einen Wasserauslass für vom Kraftstoff abgeschiedenes Wasser aufweist und in dem ein Filterelement angeordnet ist, das den Kraftstoffeinlass dicht von dem Kraftstoffauslass trennt und das ein als Hohlkörper ausgestaltetes Filtermedium aufweist, das zur Filtrierung des Kraftstoffs von innen nach außen oder von außen nach innen durchströmbar ist, und das ein als Hohlkörper gestaltetes Koaleszenzmedium zur Abscheidung von im Kraftstoff enthaltenem Wasser aufweist.

Ferner betrifft die Erfindung ein Filterelement eines Kraftstofffilters für Kraftstoff, insbesondere Dieselkraftstoff, einer Brennkraftmaschine insbesondere eines Kraftfahrzeugs, das in einem Gehäuse des Kraftstofffilters so angeordnet werden kann, dass es einen Kraftstoffeinlass des Gehäuses dicht von einem Kraftstoffauslass trennt, und das ein als Hohlkörper ausgestaltetes Filtermedium aufweist, das zur Filtrierung des Kraftstoffs von innen nach außen oder von außen nach innen durchströmbar ist, und das ein als Hohlkörper gestaltetes Koaleszenzmedium zur Abscheidung von im Kraftstoff enthaltenem Wasser aufweist.

### Stand der Technik

Aus der GB 1 393 359 ist ein röhrenförmiges Koaleszenz-Filterelement zur Abtrennung von Wasser aus einem flüssigen Kraftstoff, insbesondere Dieselkraftstoff, bekannt. Der zu filtrierende Dieselkraftstoff passiert dabei mehrere Lagen des Filterelements. Das Filterelement umfasst wenigstens eine röhrenförmige Lage eines faserigen Filtermaterials und wenigstens eine konzentrische durchlässige Lage, die aus einem thermoplastischen Material gestaltet ist. Die durchlässige Lage kann ein gewebtes thermoplastisches Material sein, insbesondere Polypropylen, Nylon, Polytetrafluorethylen, Viskose oder ein Acrylkunststoff. Das faserige Filtermaterial kann Glasfasern enthalten. Die durchlässige Lage aus thermoplastischem Material kann zwischen zwei äußeren Schichtlagen aus faserigem Material angeordnet sein.

Dokument US 2011/084028 A1 offenbart ein Filterelement das ein als Hohlkörper ausgestaltetes Filtermedium aufweist. Das Filtermedium weist ein Koaleszenzmedium zur Abscheidung von im Kraftstoff enthaltenem Wasser auf. Das Koaleszenzmedium umfasst eine Regeneratfaser-Koaleszenzlage aus einem zur Koaleszenz von Wasser geeignetem Koaleszenzmaterial mit einem Gewichtsanteil von 20.3 % Lyocellfasern.

Der Erfindung liegt die Aufgabe zugrunde, einen Kraftstofffilter und ein Filterelement eines Kraftstofffilters der eingangs genannten Art zu gestalten, bei dem die Filtrierung von Partikeln aus dem Kraftstoff und die Abscheidung von im Kraftstoff enthaltenem Wasser verbessert werden.

### Offenbarung der Erfindung

Diese Aufgabe wird erfindungsgemäß dadurch gelöst, dass das Koaleszenzmedium im Strömungsweg des Kraftstoffs hinter dem Filtermedium, dieses umgebend oder in dem von ihm begrenzten Innenraum, angeordnet ist, und das Koaleszenzmedium wenigstens eine Regeneratfaser-Koaleszenzlage aus einem zur Koaleszenz von Wasser geeigneten Koaleszenzmaterial umfasst, das einen Gewichtsanteil von wenigstens 20 %, vorzugsweise von wenigstens 50 %, Regeneratfasern aufweist, und die Regeneratfasern des Koaleszenzmaterials der wenigstens einen Regeneratfaser-Koaleszenzlage Viskosefasern sind.

Erfindungsgemäß ist das Filterelement mehrstufig. In Durchflussrichtung betrachtet kann das Koaleszenzmedium bevorzugt hinter dem Filtermedium angeordnet sein. Das Filtermedium kann vorteilhafterweise mehrlagig sein. Es kann vorteilhafterweise gefaltet sein. Mit dem Filtermedium werden insbesondere Partikel, welche den Kraftstoff verunreinigen, herausgefiltert. Bevorzugt kann das Filtermedium frei von Glasfasern sein.

An dem Koaleszenzmedium werden auch kleinste Wassertröpfchen, welche im Kraftstoff enthalten sind, zu größeren Wassertropfen vereinigt. Dabei werden die feinen Wassertröpfchen an dem Koaleszenzmaterial zurückgehalten und vergrößert, bis sie von der Kraftstoffströmung wieder mitgerissen und aus dem Koaleszenzmedium ausgetragen werden. Das Koaleszenzmedium kann mindestens eine engporige Schicht aufweisen, welche in Durchflussrichtung vorzugsweise unmittelbar nach dem Filtermedium angeordnet ist. Vorzugsweise kann die mindestens eine engporige Schicht des Koaleszenzmediums gewickelt sein. Die mindestens eine engporige Schicht kann als Vorkoaleszenzlage bezeichnet werden, mit der kleinste Wassertröpfchen gesammelt und in einer ersten Stufe zu größeren Wassertröpfchen vereinigt werden können.

Das Koaleszenzmedium kann ferner eine einlagige oder mehrlagige regeneratfaserhaltige Stufe aufweisen. Die regeneratfaserhaltige Stufe des Koaleszenzmediums kann vorzugsweise gewickelt sein. Das Koaleszenzmaterial der viskosehaltigen Stufe kann vorzugsweise weiterporig sein als das Koaleszenzmaterial der mindestens einen engporigen Schicht des Koaleszenzmediums. Die viskosehaltige Stufe kann vorzugsweise in Durchlassrichtung hinter der engporigen Schicht angeordnet sein. Mit der viskosehaltigem Stufe können die in der mindestens einen engporige Schicht zu größeren Wassertröpfchen vereinigten kleinsten Wassertröpfchen gesammelt und zu noch größeren Wassertröpfchen vereinigt werden.

Stromabwärts des Filterelements kann ein Stützkörper angeordnet sein. Vorteilhafterweise kann der Stützkörper über Rippen verfügen. Mit einer Rippenanordnung kann eine größere Gesamtdurchlassfläche realisiert werden als mit einer Wand, die eine Mehrzahl von Durchlassöffnungen aufweist. Das vorgelagerte Filtermedium schützt das Koaleszenzmedium vor Verschmutzung.

Regeneratfasern haben den Vorteil, dass sie bei dem Kontakt mit dem Kraftstoff, insbesondere mit im Dieselkraftstoff vorkommenden Additiven, ihre Funktion als Koaleszenzmaterial nicht verlieren. Im Unterschied dazu verlieren aus dem Stand der Technik bekannte Koaleszenzmaterialien, insbesondere mit Glasfasern oder imprägnierter Zellulose, beim Kontakt mit Dieselkraftstoff ihre Koaleszenzfunktion, so dass die Wassertropfen nahezu unvergrößert passieren können. Regeneratfaser haben ferner optimale hydrophile Eigenschaften, sodass es die Wassertropfen effizient einfangen und vereinigen kann. Bei einem Gewichtsanteil von wenigstens 20 %, vorzugsweise wenigstens 50 %, Regeneratfasern werden sehr gute Ergebnisse in Bezug auf Koaleszenz, Druckverluste, Stabilität und Standzeiten erreicht.

Bei einer vorteilhaften Ausführungsform kann das Koaleszenzmaterial der wenigstens einen Regeneratfaser-Koaleszenzlage aus einem nichtgewebten Material bestehen. Nicht gewebtes Koaleszenzmaterial kann einfach hergestellt werden. Insbesondere ist das Koaleszenzmaterial der Regeneratfaser-Koaleszenzlage ein Vlies bzw. Faserflor.

Bei der Herstellung kann das Koaleszenzmaterial insbesondere durch Wasserstrahlverfestigung oder durch Nadelverfestigung verfestigt werden. Auf diese Weise werden lose, einzelne Fasern zu einem Faserflor zusammengefügt.

Vorzugsweise kann das Koaleszenzmedium mehrere Lagen aus Regeneratfasermaterial mit einem Gewichtsanteil von wenigstens 50 % Regeneratfasern aufweisen. Durch den hohen Regeneratfaseranteil kann die Abscheidung von Wassertropfen verbessert werden.

Für die Fasern kann eine Vorzugsrichtung vorgegeben werden, wodurch die Koaleszenzfunktion verbessert werden kann. Das Koaleszenzmaterial kann so in durch die Faserausrichtung zueinander geneigten Richtungen unterschiedliche Dehnbarkeiten aufweisen.

Die Dicke der wenigstens einen Lage aus viskosehaltigem Koaleszenzmaterial kann vorteilhafterweise zwischen etwa 0,5 mm und 1,5 mm betragen. Vorteilhafterweise kann eine Luftdurchlässigkeit der wenigstens einen Lage aus viskosehaltigem Koaleszenzmaterial von wenigstens etwa 500 L/m²s bei einer Druckdifferenz zwischen Reinseite und Rohseite von etwa 200 Pa vorgesehen sein. Sämtliche Dickenangaben beziehen sich auf eine Dicke gemessen nach der Deutschen Industrie Norm DIN EN ISO 9073-2. Die Angaben zur Luftdurchlässigkeit sind dabei nach einer Messmethode gemäß der Deutschen Industrie Norm DIN EN ISO 9237 bestimmt.

Vorteilhafterweise kann die Gesamtdicke der wenigstens eine Lage aus viskosehaltigem Koaleszenzmaterial zwischen etwa 1 mm und etwa 10 mm liegen. Mit dem erfindungsgemäßen Koaleszenzmedium können vorteilhafterweise emulgierte Wassertropfen im Kraftstoff von einer Ursprungsgröße von insbesondere etwa 1 µm bis etwa 90 µm auf mehr als etwa 100 µm vergrößert werden. Dabei können bei einer Vorkoaleszenz durch eine Meltblownlage Wassertropfen mit einer Ursprungsgröße von etwa 1 µm bis etwa 30 µm auf etwa 20 µm bis etwa 90 µm vergrößert werden.

Die Wassertropfen können stromabwärts des Koaleszenzmediums insbesondere in einem Ausfällspalt ausgefällt werden. Der Ausfällspalt kann auf der dem Koaleszenzmedium gegenüberliegenden Seite vorteilhafterweise durch einen Trennmedium begrenzt sein. Die Wassertropfen können aufgrund ihres spezifischen Gewichts nach unten sinken.

Mit dem erfindungsgemäßen Kraftstofffilter können auch Kraftstoffe gereinigt werden, deren spezifisches Gewicht größer ist als Wasser, bei denen analog die Wassertropfen räumlich nach oben steigen. Zu diesem Zweck kann das Filterelement umgedreht angeordnet werden. Entsprechend können der Kraftstoffeinlass, der Kraftstoffauslass und der Wasserauslass zweckmäßig anders angeordnet sein.

Vorteilhafterweise kann das Wasser insbesondere in einem Wassersammelraum gesammelt werden, welcher mit dem Wasserauslass verbunden ist. Falls vorteilhafterweise vorgesehen ist, dass das Filtermedium von radial innen nach außen durchströmt wird, kann sich das Koaleszenzmedium bevorzugt außerhalb des Filtermediums befinden und dieses umgeben. Wenn alternativ vorgesehen ist, dass das Filtermedium von radial außen nach innen durchströmt wird, kann sich das Koaleszenzmedium bevorzugt in dem Innenraum des Filtermediums befinden.

Ferner kann vorteilhafterweise das Gehäuse öffenbar sein und das Filterelement kann austauschbar im Gehäuse angeordnet sein. Das Filterelement kann so einfach zum Austausch oder zu Wartungszwecken aus dem Gehäuse entfernt werden.

Bei einem Ausführungsbeispiel (nicht gemäß der Erfindung) sind die Regeneratfasern des Koaleszenzmaterials der wenigstens einen Regeneratfaser-Koaleszenzlage Lyocellfasern. Lyocellfasern sind eine aus Cellulose bestehende, industriell hergestellte Regeneratfaser, die nach dem Direkt-Lösemittelverfahren hergestellt wird. Lyocellfaser werden z. B. von der Fa. Lenzing AG unter dem Markennamen Tencelfasern angeboten. Die Lyocellfaser zeichnen sich durch besonders gute Koaleszenzeigenschaften aus. Dies trifft insbesondere bei einem Koaleszenzmaterial mit einem Gewichtsanteil von zumindest nahezu 100 % Lyocellfasern zu.

Ebenfalls sehr gute Koaleszenzeigenschaften zeigt eine Regeneratfaser-Koaleszenzlage, die Regeneratfasern in Form von Viskosefaser aufweist. In der Praxis hat sich gezeigt, dass im Falle von Viskosefasern vorteilhafterweise das Koaleszenzmaterial der zumindest einen Regeneratfaser-Koaleszenzlage einen Gewichtsanteil kleiner 95% Viskosefasern aufweisen sollte.

Bei einer weiteren vorteilhaften Ausführungsform kann das Koaleszenzmaterial zusätzlich zu den Viskosefasern ein hydrophobes Polymer, insbesondere einen hydrophoben Polyester, im Speziellen Polyethylenterephthalat (PET), aufweisen. Durch das hydrophobe Polymer kann bewirkt werden, dass die Wassertropfen gestoppt und gesammelt werden. Auf diese Weise werden die Koaleszenzeigenschaften des Koaleszenzmaterials weiter verbessert.

Vorteilhafterweise kann das Koaleszenzmaterial der Regeneratfaser-Koaleszenzlage im Wesentlichen aus Viskosefasern mit einem Gewichtsanteil von etwa 80% und einem hydrophoben Polymer mit einem Gewichtsanteil von etwa 20%, bestehen. Ein derartiges Koaleszenzmaterial hat sich in der Praxis bewährt und verfügt über besonders gute Koaleszenzeigenschaften.

Bei einer weiteren vorteilhaften Ausführungsform kann das Koaleszenzmedium im Strömungsweg des Kraftstoffs vor der Regeneratfaser-Koaleszenzlage, vorzugsweise im Strömungsweg des Kraftstoffs unmittelbar vor der Regeneratfaser-Koaleszenzlage, zumindest eine Vorkoaleszenzlage aufweisen, die insbesondere aus Koaleszenzmaterial gebildet ist, welches feinporiger ist als das Koaleszenzmaterial der Regeneratfaser-Koaleszenzlage. "Unmittelbar" bedeutet in diesem Zusammenhang, dass die Vorkoaleszenzlage an der Regeneratfaser-Koaleszenzlage anliegt, insbesondere flächig anliegt. Auf diese Weise wird eine Vorstufe und einer Hauptstufe realisiert, um auch kleinste Wassertropfen einzufangen und zu größeren Tropfen zu vereinigen.

Vorteilhafterweise kann das Koaleszenzmedium in Strömungsrichtung vor der Regeneratfaser-Koaleszenzlage eine Vorkoaleszenzlage aus einem synthetischen, insbesondere nichtgewebten, Koaleszenzmaterial aufweisen, welches insbesondere Polyester aufweisen kann, wobei die Vorkoaleszenzlage vorzugsweise als Meltblownlage oder als eine Lage aus Spinnvlies ausgebildet sein kann. Synthetische Materialien können einfach hergestellt werden und sind stabil. Sie können beständig gegenüber chemischen und/oder physikalischen Belastungen ausgestattet sein.

Vorteilhafterweise kann die Gesamtdicke der Vorkoaleszenzlage zwischen etwa 0,1 mm und etwa 0,9 mm liegen. Die Luftdurchlässigkeit der Vorkoaleszenzlage kann vorteilhafterweise zwischen etwa 30 L/sm² bis etwa 150 L/sm² sein bei einem Differenzdruck von etwa 200 Pa (Deutschen Industrie Norm DIN EN ISO 9237).

Vorteilhafterweise kann der Faserdurchmesser der Vorkoaleszenzlage, insbesondere des synthetischen Materials der Meltblownlage, zwischen etwa 0,8 µm und etwa 10 µm betragen. Auf diese Weise können die Wassertropfen aus dem Kraftstoff zu einer optimalen Größe vergrößert werden. Die Faserdurchmesser können dabei mittels eines Rasterelektronenmikroskops (REM) ermittelt werden.

Vorteilhafterweise kann sich die Lage aus dem synthetischen Material in Strömungsrichtung vor der wenigstens einen Lage aus dem regeneratfaserhaltigen Koaleszenzmaterial im Koaleszenzmedium befinden. Auf diese Weise kann das regeneratfaserhaltige Koaleszenzmaterial zusätzlich vor Verschmutzung geschützt werden.

Vorteilhafterweise kann das Koaleszenzmedium in Strömungsweg des Kraftstoffs nach der Regeneratfaser-Koaleszenzlage wenigstens eine, vorzugsweise mehrere, zusätzliche Koaleszenzlagen aufweisen, welche vorzugsweise aus einem Koaleszenzmaterial gebildet ist bzw. sind, welches einen Gewichtsanteil von wenigstens 20 % Regeneratfasern aufweist, im Speziellen aus demselben Koaleszenzmaterial wie die Regeneratfaser-Koaleszenzlage gebildet ist bzw. sind. Dies hat den Vorteil, dass auch verhältnismäßig dicke Koaleszenzmedien einfach hergestellt werden können. Ein dickes Koaleszenzmedium kann aus mehreren dünnen Regeneratfaser-Koaleszenzlagen einfacher hergestellt werden als aus einer einzigen Regeneratfaser-Koaleszenzlage.

Ferner kann vorteilhafterweise das Koaleszenzmaterial der zumindest einen Regeneratfaser-Koaleszenzlage ein Flächengewicht zwischen 75 g/m² und 170 g/m², aufweisen. Im Falle einer Regeneratfaser-Koaleszenzlage mit Viskosefasern hat sich ein Koaleszenzmaterial mit einem Flächengewicht von etwa 100 g/m², bei einer Regeneratfaser-Koaleszenzlage mit Lyocellfasern hat sich ein Koaleszenzmaterial mit einem Flächengewicht von etwa 150 g/m² bewährt. Das Koaleszenzmaterial einer Vorkoaleszenzlage kann vorzugsweise ein Flächengewicht zwischen 80 g/m² bis 120 g/m² aufweisen. Mit einem derartigen Flächengewicht können insbesondere die Durchlässigkeit und die Koaleszenzeffizienz verbessert werden.

Vorteilhafterweise kann das Koaleszenzmaterial der Regeneratfaser-Koaleszenzlage einen mittleren Porendurchmesser von etwa 60 µm bis 150 µm aufweisen und/oder das Koaleszenzmaterial einer Vorkoaleszenzlage kann einen mittleren Porendurchmesser von etwa 1 µm bis 30 µm aufweisen. Die vorstehenden Bereichsangaben für den mittleren Porendurchmesser ergeben sich durch die bewährte Bestimmungsmethode der Kapillardruckmessung (Bubble Point Test). Der mittlere Porendurchmesser ergibt sich aus den Messwerten an demjenigen Messpunkt, an dem die gesamte Probenoberfläche mit Luftblasen besetzt ist. Die Messung wurde mit 96%igem Ethanol durchgeführt.

Bei einer weiteren vorteilhaften Ausführungsform kann das Koaleszenzmedium unmittelbar an einer Reinseite des insbesondere gefalteten Filtermediums anliegen, insbesondere kann das Filtermedium mit dem Koaleszenzmedium umwickelt sein. Das Koaleszenzmedium kann direkt, also ohne Abstand, an dem Filtermedium anliegen. Es ist kein Stützkörper zum Stützen des Koaleszenzmediums erforderlich, was den Bauteileaufwand und den Montageaufwand verringert. Auf diese Weise kann auch ein Koaleszenzmedium verwendet werden, das alleine keine ausreichende Formstabilität aufweist. Das Filtermedium kann somit auch die Stabilisierung und Formgebung des Koaleszenzmediums leisten. Ferner kann so die Herstellung vereinfacht werden, indem bei einem von radial innen nach außen zu durchströmenden Filtermedium das Koaleszenzmedium um das zuvor hergestellte Filtermedium gewickelt werden kann.

Ferner können vorteilhafterweise das Filtermedium, das Koaleszenzmedium und gegebenenfalls das Trennmedium koaxial angeordnet sein. Eine koaxiale Anordnung ist platzsparend. Ferner kann in einer koaxialen Anordnung ein Strömungsverlauf des Kraftstoffs von radial außen nach innen oder radial innen nach außen einfach optimiert werden. Die Grundfläche des Filtermediums, des Koaleszenzmediums und des Trennmediums können dabei ähnlich sein. Die Grundflächen können aber auch unterschiedlich sein. Sie können insbesondere rund, oval oder eckig sein. Vorteilhafterweise kann das Filterelement ein Rundfilterelement sein. Rundfilterelemente können besonders platzsparend aufgebaut werden. Mit Rundfilterelementen kann ein optimales Verhältnis von Filter-/Abscheidefläche zum Bauraum realisiert werden. Vorteilhafterweise kann die erste Stufe des Filterelements ein sterngefalteter Filterbalg sein. Die daran anschließende Stufe kann je nach Durchströmungsrichtung ein darauf oder darin zylindrisch gewickelter Körper mit dem Koaleszenzmaterial sein.

Bei Durchströmung von außen nach innen kann sich die zweite Stufe auf einem Mittelrohr oder einem anderen stützenden Bauteil abstützen, das konzentrisch zu den beiden ersten Stufen angeordnet sein kann. Bei der Durchströmung von innen nach außen kann das Koaleszenzmaterial direkt auf den fertigen Balg des Filtermediums gewickelt und gegen den Innendruck insbesondere fest verklebt und/oder mit einer äußeren Struktur gestützt werden.

Vorteilhafterweise kann zusätzlich ein festes Gitter mit eingewickelt werden. Vorteilhafterweise können das Filtermedium und das Koaleszenzmedium stirnseitig mit gemeinsamen Endscheiben verbunden, insbesondere verklebt oder eingebettet, sein.

Vorteilhafterweise kann das Koaleszenzmaterial der Regeneratfaser-Koaleszenzlage und/oder einer Vorkoaleszenzlage in Umfangsrichtung des Koaleszenzmediums eine Dehnbarkeit bzw. Elastizität aufweisen, welche kleiner ist als dessen Dehnbarkeit bzw. Elastizität in axialer Richtung des Koaleszenzmediums, insbesondere kann die Dehnbarkeit bzw. Elastizität in Umfangsrichtung um ein mehrfaches kleiner sein als in axialer Richtung. " Axial" und "in Umfangsrichtung" beziehen sich hier auf eine Achse des Kraftstofffilters und nicht auf eine Achse einer Fertigungsanlage. Auf diese Weise kann das Koaleszenzmaterial optimal gewickelt werden. Bei der Durchströmungsrichtung von radial innen nach außen kann so das Koaleszenzmaterial einfach auf das Filtermedium aufgespannt werden.

Die Aufgabe wird erfindungsgemäß durch das Filterelement gemäß Anspruch 1 gelöst. Die im Zusammenhang mit dem erfindungsgemäßen Kraftstofffilter aufgezählten Vorteile und Merkmale gelten für das erfindungsgemäße Filterelement entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Es zeigen schematisch
- Figur 1: einen Längsschnitt eines Kraftstofffilters mit einem austauschbaren, dreistufigen Filterelement, dass ein Koaleszenzmedium mit Viskosefasern aufweist;
- Figur 2: eine Detailansicht des Koaleszenzmediums aus der Figur 1.

In den Figuren sind gleiche Bauteile mit gleichen Bezugszeichen versehen.

### Ausführungsform(en) der Erfindung

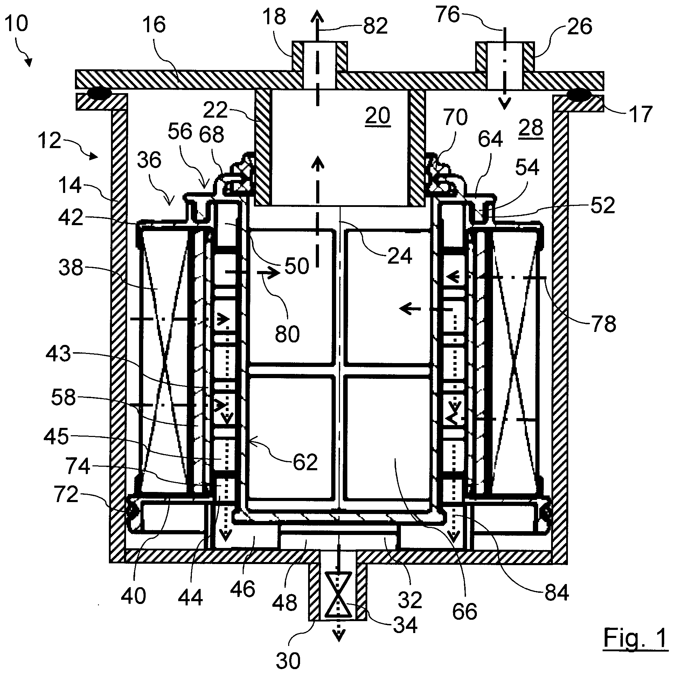

In Figur 1 ist im Längsschnitt ein Kraftstofffilter 10 eines Kraftstoffsystems einer Brennkraftmaschine eines Kraftfahrzeugs gezeigt. Der Kraftstofffilter 10 dient zur Reinigung des für den Betrieb der Brennkraftmaschine verwendeten Kraftstoffs, beispielsweise Dieselkraftstoff. Ferner dient der Kraftstofffilter 10 zur Abscheidung von in dem Kraftstoff enthaltenem Wasser.

Der Kraftstofffilter 10 verfügt über ein zweiteiliges Gehäuse 12 mit einem becherförmigen Filtertopf 14 und einem Filterdeckel 16, der trennbar auf dem Filtertopf 14 angeordnet ist. Zwischen dem Filtertopf 14 und dem Filterdeckel 16 ist eine Ringdichtung 17 angeordnet.

In dem Deckel 16 ist etwa zentral ein Auslassstutzen 18 für den gereinigten Kraftstoff angeordnet, welcher außerhalb des Gehäuses 12 mit einer in der Figur 1 nicht gezeigten Kraftstoffableitung verbunden ist. Im Inneren des Gehäuses 12 ist der Auslassstutzen 18 mit einem Ablaufraum 20 in einem Innenraum eines Verbindungsstutzens 22 verbunden. Der Verbindungsstutzen 22 erstreckt sich auf der dem Inneren des Gehäuses 12 zugewandten Seite des Deckels 16 koaxial zu einer Filterachse 24. In der normalen Einbaulage unter normalen Betriebsbedingungen der Brennkraftmaschine verläuft die Filterachse 24, wie in der Figur 1 gezeigt, räumlich vertikal. "Axial", "radial", "koaxial" und "umfangsmäßig" beziehen sich im Folgenden, wenn nicht anders angegeben, auf die Filterachse 24.

Radial außerhalb des Verbindungsstutzens 22 weist der Deckel 16 einen Einlassstutzen 26 für den zu reinigenden Kraftstoff auf, der mit einem Zulaufraum 28 im Gehäuse 12 verbunden ist. Außerhalb des Gehäuses 12 ist der Einlassstutzen 26 mit einer in der Figur 1 nicht gezeigten Kraftstoffzuleitung für den Kraftstoff verbunden.

Im Boden des Filtertopfs 14 ist ein Wasserablaufstutzen 30 koaxial zur Filterachse 24 angeordnet. Der Wasserablaufstutzen 30 ist mit einem Wassersammelraum 32 unten im Gehäuse 12 verbunden. Außerhalb des Gehäuses 12 ist der Wasserablaufstutzen 30 mit einer nicht gezeigten Wasserablassleitung verbunden, über die von dem Kraftstoff abgeschiedenes Wasser aus dem Gehäuse 12 abgeleitet werden kann. In dem Wasserablaufstutzen 30 ist ein Wasserablassventil 34 mit einem Wasserstandsensor angeordnet. Im Ruhezustand ist das Wasserablassventil 34 geschlossen, sodass keine Flüssigkeit aus dem Wassersammelraum 32 durch den Wasserablaufstutzen 30 aus dem Gehäuse 12 entweichen kann. Bei Erreichen eines vorgegebenen maximalen Wasserstandes im Wassersammelraum 32 öffnet das Wasserablassventil 34 automatisch, sodass das abgeschiedene Wasser über den Wasserablaufstutzen 30 abgelassen werden kann.

In dem Gehäuse 12 ist ein austauschbares Filterelement 36 angeordnet. Das Filterelement 36 ist als Rundfilterelement ausgestaltet. Das Filterelement 36 trennt den Einlassstutzen 26 dicht von dem Auslassstutzen 18. Das Filterelement 36 umfasst ein sternförmig gefaltetes Filtermedium 38, mit dem insbesondere Partikel aus dem zu reinigenden Kraftstoff heraus filtriert werden. Das Filtermedium 38 hat insgesamt die Form eines koaxialen Kreiszylindermantels. Das Filtermedium 38 besteht aus einer oder mehreren Lagen eines vorzugsweise glasfaserfreien Filtermaterials. An einer dem Boden des Filtertopfs 14 zugewandten unteren Stirnseite ist das Filtermedium 38 dicht mit einer Abschlussendscheibe 40 verbunden. An seiner gegenüberliegenden, dem Deckel 16 zugewandten oberen Stirnseite ist das Filtermedium 38 dicht mit einer Anschlussendscheibe 42 verbunden. Zwischen der Anschlussendscheibe 42 und der Abschlussendscheibe 40 erstreckt sich in einem Innenraum 45 des Filtermediums 38 koaxial ein skelettartiges, fluiddurchlässiges Mittelrohr 43, welches die beiden Endscheiben 40 und 42 stabil miteinander verbindet. Das Mittelrohr 43 besteht aus Axialrippen, welche über ringförmige Umfangsrippen miteinander verbunden sind.

Die Abschlussendscheibe 40 weist eine koaxiale Öffnung 44 auf. Die Öffnung 44 ist von dem Mittelrohr 43 umgeben. Die Öffnung 44 verbindet den Innenraum 45 mit dem Wassersammelraum 32. Auf der dem Boden des Filtertopfs 14 zugewandten Außenseite verfügt die Abschlussendscheibe 40 über vier Stützstege 46, die sich gleichmäßig verteilt entlang eines gedachten koaxialen Kreiszylindermantels erstrecken. Der gedachte Kreiszylindermantel umgibt die Öffnung 44 und den Wasserablaufstutzen 30. Mit den Stützstegen 46 wird das Filterelement 36 gegen den Boden des Filtertopfs 14 abgestützt. Zwischen den Stützstegen 46 befinden sich Verbindungsöffnungen 48, über die sich Wasser im Wassersammelraum 32 auch radial außerhalb der Stützstege 46 verteilen kann.

Die Anschlussendscheibe 42 weist eine koaxiale Öffnung 50 auf. Die Öffnung 50 ist von zwei koaxialen Vorsprüngen umgeben, die sich an der Außenseite der Anschlussendscheibe 42 in axialer Richtung erstrecken. Die beiden Vorsprünge begrenzen eine Aufnahmenut 52 für einen ringartigen Einstecksteg 54 einer Trenneinheit 56 des Filterelements 36.

Zwischen der radial inneren Umfangsseite des Filtermediums 38 und dem Mittelrohr 43 befindet sich ein koaxiales Koaleszenzmedium 58. Das Koaleszenzmedium 58 liegt unmittelbar und ohne Abstand an der radial inneren Umfangsseite des Filtermediums 38 an. Das Koaleszenzmedium 58 ist umfangsmäßig geschlossen und erstreckt sich zwischen der Anschlussendscheibe 42 und der Abschlussendscheibe 40. Das Koaleszenzmedium 64 dient der Zusammenführung auch von kleinsten im Kraftstoff enthaltenen Wassertröpfchen zu größeren Wassertropfen.

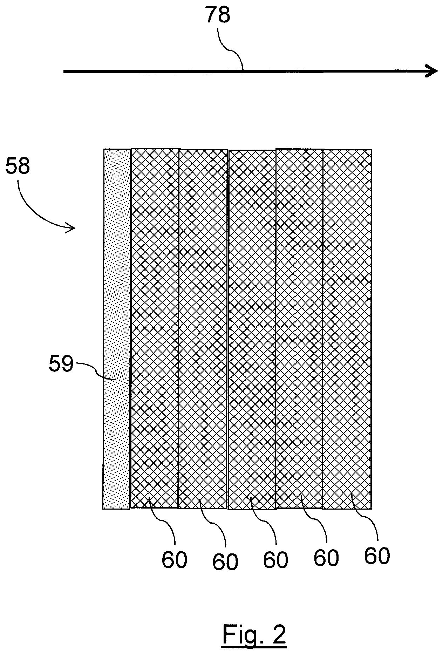

Das Koaleszenzmedium 58 besteht, wie in der Figur 2 im Detail gezeigt, aus einer Meltblownlage 59, die sich radial außen befindet, und fünf Lagen eines Koaleszenzmaterials 60 (Regeneratfaser-Koaleszenzlagen).

Die Meltblownlage 59 besteht aus Polyester und ist nach einem Meltblownverfahren hergestellt. Die Meltblownlage 59 hat eine Dicke von etwa 0,1 mm bis 0,9 mm. Ihre Luftdurchlässigkeit beträgt zwischen etwa 30 l/sm² und etwa 150 l/sm² bei einem Druck von etwa 200 Pa.

Das Koaleszenzmaterial 60 besteht aus nichtgewebten, hydrophilen Viskosefasern mit einem Gewichtsanteil von mehr als 50 %, vorzugsweise mehr als 80 %, und Polyester mit einem Gewichtsanteil von weniger als 50 %, vorzugsweise weniger als 20 %. Es hat ein Flächengewicht von etwa 100 g/m². Das Koaleszenzmaterial 60 ist nadelverfestigt hergestellt. Das Koaleszenzmaterial 60 weist in Umfangsrichtung eine Dehnung von etwa 15 % bis etwa 30 % auf. In axialer Richtung weist das Koaleszenzmaterial 60 eine Dehnung von etwa 90 % bis etwa 150 % auf. Das Koaleszenzmaterial 60 ist weiterporig als die Meltblownlage 59. Das Koaleszenzmaterial 60 weist einen mittleren Porendurchmesser von etwa 60 µm bis etwa 150 µm auf. Die Schichtdicke der einzelnen Lagen beträgt zwischen etwa 0,5 mm und etwa 1,5 mm. Die Luftdurchlässigkeit der einzelnen Lagen des Koaleszenzmaterials 60 ist größer als etwa 500 l/sm² bei etwa 200 Pa. Die Gesamtdicke aller fünf Lagen des Koaleszenzmaterials 60 beträgt, abhängig von der Dicke der Einzellagen, zwischen 1 mm und 10 mm.

Bei einer alternativen, nicht-gezeigten Bauform (nicht gemäß der Erfindung) kann das Koaleszenzmaterial nichtgewebte, hydrophile Lyocellfaser mit einem Gewichtsanteil von zumindest nahezu 100% aufweisen und hat ein Flächengewicht von etwa 150 g/m². Im Übrigen entspricht diese alternative Bauform aber der gezeigten Bauform.

Die Trenneinheit 56 verfügt über einen Stützkorb 62 mit einem Anschlussabschnitt 64, welcher auch den Einstecksteg 54 aufweist, und ein Trennmedium 66.

Der Anschlussabschnitt 64 ist etwa scheibenförmig mit einer koaxialen Öffnung, in die der Verbindungsstutzen 22 des Deckels 16 hinein ragt. Auf seiner dem Deckel 16 zugewandten Außenseite verfügt der Anschlussabschnitt 64 über einen koaxialen Anschlussstutzen 68. Der Anschlussstutzen 68 ist an seiner freien Stirnseite um 90 Grad radial nach innen gebogen. Auf dem radial inneren Rand des Anschlussstutzens 68 sitzt eine Profilringdichtung 70. In den Anschlussstutzen 68 ist der Verbindungsstutzen 22 so eingesteckt, dass die Verbindung mit der Profilringdichtung 70 abgedichtet ist.

Die Trenneinheit 56 ist mit dem Trennmedium 66 voraus axial durch die Öffnung 50 der Anschlussendscheibe 42 gesteckt. Der Stützkorb 62 und das Trennmedium 66 befinden sich in dem vom Koaleszenzmedium 58 begrenzten Innenraum, also auch im Innenraum 45 des Filtermediums 38.

Das Trennmedium 66 besteht aus einem hydrophoben Siebgewebe. Es hat die Form eines zur Filterachse 24 koaxialen Rohrs. Es erstreckt sich von der Anschlussendscheibe 42 bis zur Abschlussendscheibe 40. Das Trennmedium 66 ist umfangsmäßig geschlossen.

Die Umfangswand des Stützkorbs 62 ist gitterartig aufgebaut und flüssigkeitsdurchlässig. Auf seiner der Verbindungsstutzen 22 zugeordnet Stirnseite ist der Stützkorb 62 offen. Die dem Wassersammelraum 32 zugewandte untere Stirnseite des Stützkorbs 62 ist geschlossen. Das Trennmedium 66 liegt an der radial äußeren Umfangsseite des Stützkorbs 62 an.

Zwischen dem Trennmedium 66 und dem Koaleszenzmedium 58 befindet sich im Innenraum 45 ein Ausfällspalt 74. Der Ausfällspalt 74 hat die Form eines Ringraums. Der Ausfällspalt 74 ist radial außen durch das Koaleszenzmedium 58 und radial innen durch das Trennmedium 66 begrenzt.

An der radial äußeren Umfangsseite der Abschlussendscheibe 40 ist außerdem eine Ringdichtung 72 angeordnet, welche sich radial außen gegen die radial innere Umfangsseite des Filtertopfs 14 abstützt. Die Ringdichtung 72 dichtet dem Zulaufraum 28 gegen den Wassersammelraum 32 ab.

Beim Betrieb des Kraftstofffilters 10 wird zu reinigender Kraftstoff aus der Kraftstoffzuleitung angedeutet durch einen Pfeil 76 durch den Einlassstutzen 26 dem Zulaufraum 28 zugeführt.

Der Kraftstoff durchströmt das Filtermedium 38, angedeutet durch Pfeile 78, von dessen Rohseite radial außen zu seiner Reinseite radial innen. Dabei wird der Kraftstoff von Partikeln befreit. Das Filtermedium 38 bildet eine erste Stufe des insgesamt dreistufigen Kraftstofffilters 10 für die Reinigung/Wasserabscheidung.

Auf der Reinseite durchströmt der von Partikeln befreite Kraftstoff das Koaleszenzmedium 58 von radial außen nach innen. Dabei werden zunächst die Meltblownlage 59 und anschließend die fünf Lagen aus Koaleszenzmaterial 60 durchströmt. Im Koaleszenzmaterial 60 werden im Kraftstoff enthaltene, auch kleinste Wassertröpfen an den hydrophilen Fasern der Viskose eingefangen und zu größeren Wassertropfen vereinigt. Emulgierte Wassertropfen im Kraftstoff können so von einer Ursprungsgröße von beispielsweise etwa 1 µm bis etwa 90 µm auf mehr als 100 µm vergrößert werden. Dabei können bei einer Vorkoaleszenz durch die Meltblownlage 59 Wassertropfen mit einer Ursprungsgröße von etwa 1 µm bis etwa 30 µm auf etwa 20 µm bis etwa 90 µm vergrößert werden. Das Koaleszenzmedium 58 bildet eine zweite Stufe für die Reinigung/ Wasserabscheidung. Wenn die Tropfengröße ausreichend ist, werden die großen Wassertropfen vom durchströmenden Kraftstoff wieder mitgerissen.

Der Kraftstoff und die großen Wassertropfen durchströmen die Öffnungen zwischen den Rippen des Mittelrohrs 43 und gelangen in den Ausfällspalt 74.

Der Kraftstoff durchströmt das Trennmedium 66, welches eine dritte Stufe für die Reinigung/Wasserabscheidung bildet, von radial außen nach innen, angedeutet durch Pfeile 80, und gelangt nach oben in den Ablaufraum 20. Der gereinigte und von Wasser befreite Kraftstoff verlässt den Ablaufraum 20 über den Auslassstutzen 18, angedeutet durch Pfeile 82, und wird der Kraftstoffableitung zugeführt.

Die großen Wassertropfen hingegen werden durch das Trennmedium 66 zurückgehalten. Die sinken im Ausfällspalt 74 aufgrund ihres im Vergleich zum Kraftstoff größeren spezifischen Gewichts nach unten, angedeutet durch Pfeile 84, in den Wassersammelraum 32.

Sobald der Wasserstandsensor des Wasserablassventils 34 das Erreichen des vorgegebenen Maximalwasserstands erfasst, wird das Wasserablassventil 34 automatisch geöffnet. Das Wasser verlässt den Wassersammelraum 32 durch den Wasserablaufstutzen 30 und gelangt in die Wasserablaufleitung.

Zu Wartungszwecken, beispielsweise zum Austausch oder zur Reinigung des Filterelements 36, wird der Deckel 16 in axialer Richtung von dem Filtertopf 14 entfernt. Das Filterelement 36 wird dann in axialer Richtung aus dem Filtertopf 14 heraus gezogen.

Zum Einbau wird das Filterelement 36 mit der Abschlussendscheibe 40 voran in axialer Richtung in den Filtertopf 14 gesteckt. Anschließend wird der Deckel 16 mit dem Verbindungsstutzen 22 voran in axialer Richtung auf die offene Seite des Filtertopfs 14 gesteckt, so dass der Verbindungsstutzen 22 dicht in die Profilringdichtung 70 ragt.

Bei dem oben beschriebenen Ausführungsbeispiel eines Kraftstofffilters 10 und eines Filterelements 36 sind unter anderem folgende Modifikationen möglich:
Die Erfindung ist nicht beschränkt auf einen Kraftstofffilter 10 einer Brennkraftmaschine eines Kraftfahrzeugs. Vielmehr kann sie auch bei andersartigen Brennkraftmaschinen, beispielsweise bei Industriemotoren, eingesetzt werden.

Statt für Dieselkraftstoff kann der Kraftstofffilter 10 auch zur Reinigung/Wasserabscheidung von andersartigem flüssigem Kraftstoff eingesetzt werden. Falls ein Kraftstoff verwendet wird, dessen spezifisches Gewicht größer ist als Wasser, steigen analog die Wassertropfen auf. In diesem Fall kann das Filterelement 36 umgekehrt angeordnet sein. Ebenso können der Kraftstoffeinlass, der Kraftstoffauslass und der Wasserauslass entsprechend angeordnet sein.

Anstelle der Meltblownlage 59 kann auch eine andersartige Lage aus einem synthetischem Material, beispielsweise Polyester, vorgesehen sein. Die Lage aus dem synthetischem Material kann statt nach einem Meltblownverfahren auch nach einem andersartigen Verfahren, beispielsweise nach einem Spinnvliesverfahren, hergestellt sein.

Es kann auch mehr als eine Meltblownlage 59 oder mehr als eine Lage aus einem entsprechenden synthetischen Material vorgesehen sein. Auf die Meltblownlage 59 kann auch verzichtet werden.

Die Schichtdicke der Meltblownlage 59 oder der alternativen Lage kann auch kleiner als 0,1 mm oder größer als 0,9 mm sein. Es kann auch eine kleinere Luftdurchlässigkeit als 30 l/sm² oder eine größere Luftdurchlässigkeit als 150 l/sm² bei einem Druck von etwa 200 Pa vorgesehen sein.

Das Koaleszenzmedium 58 kann auch weniger oder mehr als fünf Lagen aus den Koaleszenzmaterial 60 aufweisen.

Das Koaleszenzmaterial 60 kann auch einen Gewichtsanteil von zwischen etwa 20 % und etwa 50 % an Viskose aufweisen.

Das Koaleszenzmaterial 60 kann auch ein Flächengewicht von weniger oder mehr als 100 g/m², vorzugsweise zwischen 75 g/m² und 125 g/m², aufweisen.

Statt Polyester kann das Koaleszenzmaterial 60 auch ein andersartiges synthetisches Material aufweisen.

Das Koaleszenzmaterial 60 kann in Umfangsrichtung auch eine Dehnung von weniger als 15 % oder mehr als 30 % aufweisen. In axialer Richtung kann das Koaleszenzmaterial 60 eine Dehnung von weniger als 90 % oder mehr als 150 % aufweisen.

Die Lagen aus dem Koaleszenzmaterial 60 können auch einen mittleren Porendurchmesser von weniger als 60 µm oder mehr als 150 µm aufweisen. Die Schichtdicken der einzelnen Lagen können auch kleiner als 0,5 mm oder größer als 1,5 mm sein. Die Luftdurchlässigkeit jeder einzelnen Lage des Koaleszenzmaterials 60 kann auch kleiner als etwa 500 l/sm² bei etwa 200 Pa seien. Die Gesamtdicke aller fünf Lagen des Koaleszenzmaterials 60 kann abhängig von den Dicken der Einzellagen auch kleiner als 1 mm oder größer als 10 mm sein.

Das Koaleszenzmaterial 60 kann statt nadelverfestigt auch in anderer Weise verfestigt, beispielsweise wasserstrahlverfestigt, hergestellt sein.

Das Filtermedium 38 kann statt sternförmig gefaltet auch als andersartiger Hohlkörper, beispielsweise auch ungefaltet, realisiert sein.

Das Filtermedium 38, das Koaleszenzmedium 58 und/oder das Trennmedium 66 können statt als Hohlzylinder auch in anderer Form, beispielsweise als Hohlkegel, realisiert sein. Sie können statt mit runden Grundflächen auch mit andersartigen, beispielsweise ovalen oder eckigen Grundflächen realisiert sein.

Das Filtermedium 38, das Koaleszenzmedium 58 und/oder das Trennmedium 66 können auch anders als koaxial zueinander oder zur Filterachse 24 angeordnet sein.

Auf die Ringdichtung 72 kann auch verzichtet werden. Bevorzugt kann die Abschlussendscheibe 40 eng an der radial inneren Umfangsseite des Filtertopfs 14 anliegen.

Der Trennmedium 66 kann statt im Innenraum 45 des Filtermediums 38 auch radial außen, das Filtermedium 38 und das Koaleszenzmedium 58 umgebend, angeordnet sein. Der zu reinigende Kraftstoff kann dann das Filtermedium 38 von radial innen nach außen durchströmen. Das Koaleszenzmedium 58 kann sich dann bevorzugt ebenfalls radial außen befinden und das Filtermedium 38 umgeben.

Der zu reinigende Kraftstoff kann statt von oben auch von unten der Rohseite des Filtermediums 38 zugeführt werden. Der Wasserablaufstutzen 30 kann statt zentral auch exzentrisch im Boden des Filtertopfs 14 angeordnet sein.

Anstelle des austauschbaren Filterelements 36 kann auch ein entsprechendes im Gehäuse 12 fest montiertes Filterelement vorgesehen sein.

## Patentansprüche

1. Filterelement (36) eines Kraftstofffilters (10) für Kraftstoff, insbesondere Dieselkraftstoff, einer Brennkraftmaschine insbesondere eines Kraftfahrzeugs, das in einem Gehäuse (12) des Kraftstofffilters (10) so angeordnet werden kann, dass es einen Kraftstoffeinlass (26) des Gehäuses (12) dicht von einem Kraftstoffauslass (18) trennt, und das ein als Hohlkörper ausgestaltetes Filtermedium (38) aufweist, das zur Filtrierung des Kraftstoffs von innen nach außen oder von außen nach innen durchströmbar ist, und das ein als Hohlkörper gestaltetes Koaleszenzmedium (58) zur Abscheidung von im Kraftstoff enthaltenem Wasser aufweist, wobei das Koaleszenzmedium (58) im Strömungsweg (78) des Kraftstoffs hinter dem Filtermedium (38), dieses umgebend oder in dem von ihm begrenzten Innenraum (45), angeordnet ist, und das Koaleszenzmedium (58) wenigstens eine Regeneratfaser-Koaleszenziage aus einem zur Koaleszenz von Wasser geeigneten, vorzugsweise nichtgewebten Koaleszenzmaterial (60) umfasst, das einen Gewichtsanteil von wenigstens 20 % Regeneratfasern, vorzugsweise von wenigstens 50 %, aufweist **dadurch gekennzeichnet, dass** die Regeneratfasern des Koaleszenzmaterials (60) der wenigstens einen Regeneiatfaser-Koaleszenzlage Viskosefasern sind.

2. Filterelement (36) nach Anspruch 1, **dadurch gekennzeichnet, dass** das Koaleszenzmaterial (60) der wenigstens einen Regeneratfaser-Koaleszenzlage aus einem nichtgewebten Material besteht.

3. Filterelement (36) nach einem der vorigen Ansprüche 1 oder 2, **dadurch gekennzeichnet, dass** das Koaleszenzmaterial (60) einen Gewichtsanteil von weniger als 95% Viskosefasern aufweist.

4. Filterelement (36) nach einem der vorigen Ansprüche, **dadurch gekennzeichnet, dass** das Koaleszenzmaterial (60) zusätzlich zu Viskosefasern ein hydrophobes Polymer, insbesondere einen hydrophoben Polyester, im Speziellen Polyethylenterephthalat (PET), aufweist.

5. Filterelement (36) nach einem der vorigen Ansprüche, **dadurch gekennzeichnet, dass** das Koaleszenzmaterial (60) der Regeneratfaser-Koaleszenzlage im Wesentlichen aus Viskosefasern mit einem Gewichtsanteil von etwa 80% und einem hydrophoben Polymer mit einem Gewichtsanteil von etwa 20%, besteht.

6. Filterelernent (36) nach einem der vorigen Ansprüche, **dadurch gekennzeichnet, dass** das Koaleszenzmedium (58) im Strömungsweg (78) des Kraftstoffs vor der Regeneratfaser-Koaleszenzlage, vorzugsweise im Strömungsweg (78) des Kraftstoffs unmittelbar vor der Regeneratfaser-Koaleszenzlage, zumindest eine Vorkoaleszenzlage aufweist, die insbesondere aus Koaleszenzmaterial gebildet ist, welches feinporiger ist als das Koaleszenzmaterial der Regeneratfaser-Koaleszenzlage.

7. Filterelement (36) nach einem der vorigen Ansprüche, **dadurch gekennzeichnet, dass** das Koaleszenzmedium (58) in Strömungsrichtung vor der Regeneratfaser-Koaleszenzlage eine Vorkoaleszenzlage aus einem synthetischen, insbesondere nichtgewebten, Koaleszenzmaterial aufweist, welches insbesondere Polyester aufweist, wobei die Vorkoaleszenzlage vorzugsweise als Meltblownlage oder als eine Lage aus Spinnvlies ausgebildet ist.

8. Filterelement (36) nach einem der vorigen Ansprüche, **dadurch gekennzeichnet, dass** das Koaleszenzmediurn (58) in Strömungsweg des Kraftstoffs nach der Regeneratfaser-Koaleszenzlage wenigstens eine, vorzugsweise mehrere, zusätzliche Koaleszenzlagen welche vorzugsweise aus einem Koaleszenzmaterial (60) gebildet ist bzw. sind, welches einen Gewichtsanteil von wenigstens 20 % Regeneratfasern aufweist, im Speziellen aus demselben Koaleszenzmaterial (60) wie die Regeneratfaser-Koaleszenzlage gebildet ist bzw. sind.

9. Filterelement (36) nach einem der vorigen Ansprüche, **dadurch gekennzeichnet, dass** das Koateszenzmaterial (60) der zumindest einen Regeneratfaser-Koaleszenzlage ein Flächengewicht zwischen 75 g/m² und 180 g/m², aufweist und/oder **dass** das Koaleszenzmaterial einer Vorkoaleszenzlage ein Flächengewicht zwischen 80 bis 120 g/m² aufweist.

10. Filterelement (36) nach einem der vorigen Ansprüche, **dadurch gekennzeichnet, dass** das Koaleszenzmaterial (60) der Regeneratfaser-Koaleszenzlage einen mittleren Porendurchmesser von etwa 60 bis 150 µm aufweist und/oder **dass** das Koaleszenzmaterial einer Vorkoaleszenzlage einen mittleren Porendurchmesser von etwa 1 bis 30 µm

11. Filterelement (36) nach einem der vorigen Ansprüche, **dadurch gekennzeichnet, dass** das Koaleszenzmedium (58) unmittelbar an einer Reinseite des insbesondere gefalteten Filtermediums (38) anliegt, insbesondere das Filtermedium (38) mit dem Koaleszenzmedium (58) umwickelt ist.

12. Filterelement (36) nach einem der vorigen Ansprüche, **dadurch gekennzeichnet, dass** das Koaleszenzmaterial (60) der Regeneratfaser-Koaleszenzlage und/oder einer Vorkoaleszenzlage in Umfangsrichtung des Koaleszenzmediums (58) eine Dehnbarkeit bzw. Elastizität aufweist, weiche kleiner als dessen Dehnbarkeit bzw. Elastizität in axialer Richtung des Koaleszenzmediums (58).

13. Kraftstofffilter (10) für Kraftstoff, insbesondere Dieselkraftstoff, einer Brennkraftmaschine insbesondere eines Kraftfahrzeugs, mit einem Gehäuse (12), welches wenigstens einen Kraftstoffeinlass (26) für zu reinigenden Kraftstoff, wenigstens einen Kraftstoffauslass (18) für gereinigten Kraftstoff und wenigstens einen Wasserauslass (30) für vom Kraftstoff abgeschiedenes Wasser aufweist und in dem ein Filterelement (36) nach einen der vorigen Ansprüche angeordnet ist, das den Kraftstoffeinlass (26) dicht von dem Kraftstoffauslass (18) trennt

## Claims

1. Filter element (36) of a fuel filter (10) for fuel, in particular diesel fuel, of an internal combustion engine, in particular of a motor vehicle, which can be disposed in a housing (12) of the fuel filter (10) in such a way that it tightly separates a fuel inlet (26) of the housing (12) from a fuel outlet (18) and that features a filter medium (38) designed as hollow body which can be flowed through from the inside to the outside or from the outside to the inside for filtering the fuel, and which features a coalescence medium (58) designed as hollow body for separating water contained in the fuel, wherein the coalescence medium (58) is disposed in the flow path (73) of the fuel behind the filter medium (38), surrounding the latter or disposed in the interior space (45) bounded by it, and the coalescence medium (58) comprises at least one regenerated fiber coalescence layer made of a preferably non-woven coalescence material (60) suitable for the coalescence of water which features parts by weight of at least 20 % of regenerated fibers, preferably at least 50 %, **characterized in that** the regenerated fibers of the coalescence material (60) of the at least one regenerated fiber coalescence layer are viscose fibers.

2. Filter element (36) according to claim 1, **characterized in that** the coalescence material (60) of the at least one regenerated fiber coalescence layer consists of a non-woven material.

3. Filter element (36) according to one of the previous claims 1 or 2, **characterized in that** the coalescence material (60) features parts by weight of less than 95 % viscose fibers.

4. Filter element (36) according to one of the previous claims, **characterized in that** the coalescence material (60) features, in addition to viscose fibers, a hydrophobic polymer, in particular a hydrophobic polyester, specifically polyethylene terephthalate (PET).

5. Filter element (36) according to one of the previous claims, **characterized in that** the coalescence material (60) of the regenerated fiber coalescence layer consists essentially of viscose fibers in parts by weight of about 80 % and a hydrophobic polymer in parts by weight of about 20 %.

6. Filter element (36) according to one of the previous claims, **characterized in that** the coalescence medium (58) in the flow path (78) of the fuel upstream of the regenerated fiber coalescence layer, preferably in the flow path (78) of the fuel immediately upstream of the regenerated fiber coalescence layer, features at least one pre-coalescence layer which is formed in particular from coalescence material which is more fine-pored than the coalescence material of the regenerated fiber coalescence layer.

7. Filter element (36) according to one of the previous claims, **characterized in that** the coalescence medium (58) features, in the flow direction upstream of the regenerated fiber coalescence layer, a pre-coalescence layer of a synthetic, in particular non-woven, coalescence material which features, in particular, polyester, wherein the pre-coalescence layer preferably is designed as a meltblown layer or as a layer of spunbonded fabric.

8. Filter element (36) according to one of the previous claims, **characterized in that** the coalescence medium (58) features in the flow path of the fuel downstream of the regenerated fiber coalescence layer at least one, preferably several, additional coalescence layers, which is or are preferably formed from a coalescence material (60) which features parts by weight of at least 20 % regenerated fibers, in particular is or are formed from the same coalescence material (60) as the regenerated fiber coalescence layer.

9. Filter element (36) according to one of the previous claims, **characterized in that** the coalescence material (60) of the at least one regenerated fiber coalescence layer features a weight per unit area of between 75 g/m2 and 180 g/m2 and/or **in that** the coalescence material of a pre-coalescence layer features a weight per unit area of between 80 and 120 g/m2.

10. Filter element (36) according to one of the previous claims, **characterized in that** the coalescence material (60) of the regenerated fiber coalescence layer features a mean pore diameter of approximately 60 to 150 µm and/or **in that** the coalescence material of a pre-coalescence layer features a mean pore diameter of approximately 1 to 30 µm.

11. Filter element (36) according to one of the previous claims, **characterized in that** the coalescence medium (58) directly abuts against a clean side of the, in particular, folded filter medium (38), in particular the filter medium (38) is wrapped with the coalescence medium (58).

12. Filter element (36) according to one of the previous claims, **characterized in that** the coalescence material (60) of the regenerated fiber coalescence layer and/or of a pre-coalescence layer features, in the circumferential direction of the coalescence medium (58), an extensibility or elasticity which is smaller than its extensibility or elasticity in the axial direction of the coalescence medium (58).

13. Fuel filter (10) for fuel, in particular diesel fuel, of an internal combustion engine, in particular of a motor vehicle, having a housing (12), which features at least one fuel inlet (26) for fuel to be cleaned, at least one fuel outlet (18) for cleaned fuel and at least one water outlet (30) for water separated from the fuel, and in which a filter element (36) is disposed according to one of the previous claims, that tightly separates the fuel inlet (26) from the fuel outlet (18).

## Revendications

1. Élément filtrant (36) d'un filtre à carburant (10), notamment à gazole, d'un moteur à combustion interne notamment d'un véhicule automobile, qui peut être placé dans un boîtier (12) du filtre à carburant (10) de manière à ce qu'il sépare une entrée de carburant (26) du boîtier (12) de façon étanche d'une sortie de carburant (18), et qui présente un milieu filtrant (38) exécuté sous forme de corps creux qui peut être traversé de l'intérieur vers l'extérieur ou de l'extérieur vers l'intérieur à des fins de filtration du carburant, et qui présente un milieu de coalescence (58) exécuté sous forme de corps creux destiné à séparer l'eau contenue dans le carburant, le milieu de coalescence (58) étant disposé dans le trajet d'écoulement (73) du carburant derrière le milieu filtrant (38), entourant ce dernier ou dans l'espace intérieur (45) limité par ce dernier, et le milieu de coalescence (58) comprenant au moins une couche de coalescence en fibres régénérées constituée d'un matériau de coalescence (60) approprié à la coalescence d'eau, de préférence non tissé, qui présente un pourcentage en poids de fibres régénérées d'au moins 20 %, de préférence d'au moins 50 %, **caractérisé en ce que** les fibres régénérées du matériau de coalescence (60) de la couche de coalescence en fibres régénérées, au moins au nombre d'une, sont des fibres de viscose.

2. Élément filtrant (36) selon la revendication 1, **caractérisé en ce que** le matériau de coalescence (60) de la couche de coalescence en fibres régénérées, au moins au nombre d'une, est constitué d'un matériau non tissé.

3. Élément filtrant (36) selon l'une des revendications 1 ou 2 précédentes, **caractérisé en ce que** le matériau de coalescence (60) présente un pourcentage en poids de fibres de viscose inférieure à 95 %.

4. Élément filtrant (36) selon l'une des revendications précédentes, **caractérisé en ce que** le matériau de coalescence (60) présente, outre des fibres de viscose, un polymère hydrophobe, notamment un polyester hydrophobe, tout particulièrement un polytéréphtalate d'éthylène (PET).

5. Elément filtrant (36) selon l'une des revendications précédentes, **caractérisé en ce que** le matériau de coalescence (60) de la couche de coalescence en fibres régénérées est essentiellement composé de fibres de viscose avec un pourcentage en poids de 80 % environ et d'un polymère hydrophobe avec un pourcentage en poids de 20 % environ.

6. Élément filtrant (36) selon l'une des revendications précédentes, **caractérisé en ce que** le milieu de coalescence (58) présente, dans le trajet d'écoulement (78) du carburant, en amont de la couche de coalescence en fibres régénérées, de préférence dans le trajet d'écoulement (78) du carburant, directement en amont de la couche de coalescence en fibres régénérées, au moins une couche de précoalescence constituée notamment de matériau de coalescence dont les pores sont plus fines que celles du matériau de coalescence de la couche de coalescence en fibres régénérées.

7. Élément filtrant (36) selon l'une des revendications précédentes, **caractérisé en ce que** le milieu de coalescence (58) présente dans le sens du flux, en amont de la couche de coalescence en fibres régénérées, une couche de précoalescence constituée d'un matériau de coalescence synthétique, notamment non tissé qui présente notamment du polyester, la couche de précoalescence étant exécutée de préférence en tant que couche de fibres fondues-soufflées ou couche en filé-lié.

8. Élément filtrant (36) selon l'une des revendications précédentes, **caractérisé en ce que** le milieu de coalescence (58) présente, dans le trajet d'écoulement du carburant, en aval de la couche de coalescence en fibres régénérées, au moins une couche, de préférence plusieurs couches de coalescence supplémentaires qui est/sont constituée/constituées de préférence d'un matériau de coalescence (60) avec un pourcentage en poids de fibres régénérées d'au moins 20 %, tout particulièrement constituée/constituées du même matériau de coalescence (60) que la couche de coalescence en fibres régénérées.

9. Élément filtrant (36) selon l'une des revendications précédentes, **caractérisé en ce que** le matériau de coalescence (60) de la couche de coalescence en fibres régénérées, au moins au nombre d'une, présente un grammage compris entre 75 g/m2 et 180 g/m2 et/ou que le matériau de coalescence d'une couche de précoalescence a un grammage compris entre 80 et 120 g/m2.

10. Élément filtrant (36) selon l'une des revendications précédentes, **caractérisé en ce que** le matériau de coalescence (60) de la couche de coalescence en fibres régénérées présente un diamètre de pores moyen d'environ 60 à 150 µm et/ou **que** le matériau de coalescence d'une couche de précoalescence présente un diamètre de pores moyen d'environ 1 à 30 µm.

11. Élément filtrant (36) selon l'une des revendications précédentes, **caractérisé en ce que** le milieu de coalescence (58) est en contact direct avec un côté pur du milieu filtrant (38), notamment plié, et notamment **en ce que** le milieu filtrant (38) est enveloppé du milieu de coalescence (58).

12. Élément filtrant (36) selon l'une des revendications précédentes, **caractérisé en ce que** le matériau de coalescence (60) de la couche de coalescence en fibres régénérées et/ou d'une couche de précoalescence présente en sens circonférentiel du milieu de coalescence (58) une extensibilité ou une élasticité qui est inférieure à l'extensibilité ou une élasticité en sens axial du milieu de coalescence (58).

13. Filtre à carburant (10), notamment à gazole, d'un moteur à combustion interne notamment d'un véhicule automobile, avec un boîtier (12) qui présente au moins une entrée de carburant (26) pour le carburant à filtrer, au moins une sortie de carburant (18) pour le carburant filtré et au moins une sortie d'eau (30) pour l'eau séparée du carburant, et dans lequel est disposé un élément filtrant (36) selon l'une des revendications précédentes, lequel sépare de façon étanche l'entrée de carburant (26) de la sortie de carburant (18).
